# FASCICULE DE BREVET EUROPEEN

(11) **EP 0 890 309 B1**
(45) Date de publication et mention de la délivrance du brevet: **27.11.2002**
(21) Numéro de dépôt: 98401697.2
(22) Date de dépôt: 06.07.1998
(51) Int. Cl.: A01N 31/16

(54) **Matériau alvéolaire à base de cellulose régénérée, présentant une résistance durable aux micro-organismes et sa préparation**
Zellenförmiges Material aus regenerierter Cellulose mit dauerhafter Resistenz gegenüber Mikroorganismen und seine Herstellung
Cellular material based on regenerated cellulose having durable resistance against microorganisms and preparation thereof

(30) Priorité: 07.07.1997 FR 9708580
(43) Date de publication de la demande: 13.01.1999
(73) Titulaire: FINANCIERE ELYSEES BALZAC, F-75008 Paris (FR)
(72) Inventeur: Bedue, Olivier, 75019 Paris (FR); Chalvin, Christophe, 60000 Beauvais (FR)
(74) Mandataire: Le Roux, Martine

(56) Documents cités:
- EP-A- 0 358 572
- EP-A- 0 617 074
- EP-A- 0 709 507
- WO-A-94/12034
- BE-A- 644 153
- DE-A- 3 214 610
- DE-B- 1 288 747
- DATABASE WPI Section Ch, Derwent Publications Ltd., London, GB; Class A18, AN 73-01111U XP002059711 & JP 47 050867 B (TORAY IND INC)
- DATABASE WPI Section Ch, Week 8722 Derwent Publications Ltd., London, GB; Class A23, AN 87-152412 XP002059712 & JP 62 000544 A (TEISAN SEIYAKU KK) , 1 juin 1987

## Description

La présente invention a pour objet un matériau alvéolaire à base de cellulose régénérée, présentant une résistance durable aux micro-organismes - bactéries et/ou champignons - et un procédé pour sa préparation.

La présente invention concerne tout particulièrement des éponges (produits alvéolaires cellulosiques, en volume) et des toiles-éponges (produits alvéolaires cellulosiques, plats (d'une épaisseur généralement inférieure ou égale à 10 mm, souvent de l'ordre de 5 mm)), notamment destinées aux travaux de nettoyage, d'entretien ménager ou à l'hygiène corporelle, protégées efficacement et durablement contre l'action des micro-organismes. L'homme du métier n'ignore pas que ce type de matériaux, après essorage, retient toujours dans ses pores, une certaine quantité d'eau qui, en l'absence de traitement biocide adéquat, favorise le développement de micro-organismes malodorants et malsains. Il est donc désirable de conférer à ces matériaux un pouvoir biocide durable vis-à-vis des micro-organismes présents soit dans leur structure, soit dans l'eau dont ils sont quasi en permanence imbibés.

Le substrat de base des matériaux de l'invention est de l'éponge artificielle, telle qu'obtenue par le procédé viscose, notamment décrit dans la demande FR-A-812 502. Ce procédé, familier à l'homme du métier, est précisé plus avant dans le présent texte, en référence au procédé de préparation des matériaux de l'invention. Ledit procédé repose sur une modification chimique de la matière première cellulosique. (Ladite matière première cellulosique, en l'occurrence de la pâte de bois, tout d'abord transformée en alcali-cellulose, réagit avec du sulfure de carbone, pour donner le xanthate de cellulose, soluble dans de l'eau sodée). La cellulose ainsi modifiée (transformée en l'un de ses dérivés) doit, à l'issue dudit procédé, être régénérée. La régénération est mise en oeuvre dans des conditions sévères de température et de pH.

Selon l'art antérieur, on a déjà proposé diverses méthodes pour conférer des propriétés biocides durables à des substrats alvéolaires à base de cellulose régénérée.

Ces méthodes comprennent l'introduction et la fixation de biocide(s) au sein de la structure cellulosique desdits substrats. Ladite introduction peut être réalisée :
- avant l'étape de régénération, mais il convient alors d'éviter la libération et/ou la destruction du biocide au cours de ladite régénération ;
- après régénération, le biocide ne peut être introduit que s'il est soluble ou dispersable dans une solution aqueuse ; il est alors indispensable de le fixer par la suite dans la structure poreuse afin d'éviter sa libération au cours des premières utilisations.

On a notamment proposé, selon l'art antérieur, d'introduire un agent biocide dans le produit semi-fini (après régénération de la cellulose). Ledit agent est fixé dans le réseau de cellulose, soit par précipitation - cette technique est illustrée dans les brevets US-A-3 018 192, FR-A-1 200 663 et FR-A-1 345 614 - soit par une technique associant précipitation et liage - cette dernière technique est illustrée dans la demande EP-A-0 358 572 (le produit cellulosique obtenu contient le biocide, sous forme solide, piégé mécaniquement dans un liant) -. Les différentes variantes de cette méthode sont adaptées aux produits alvéolaires cellulosiques. Toutefois, elles imposent, dans la mesure où elles sont basées sur la précipitation, l'utilisation de biocides susceptibles de présenter une charge cationique et des post-traitements qui peuvent être coûteux.

On a également proposé :
- de générer in situ un complexe métallique à base de trois éléments :
   + un polymère chélatant; et plus particulièrement le chitosan ;
   + un ion de métal de transition (notamment, Zn) susceptible de former un chélate avec ledit polymère chélatant ;
   + un agent antimicrobien susceptible de former un chélate avec ledit ion de métal de transition ; et plus particulièrement un alkyldithiocarbamate, un thiazole, un imidazole ou une pyrithione (ou un de ses sels).

De manière générale, ledit polymère intervient en amont de l'étape de régénération de la cellulose et ledit agent antimicrobien en aval de celle-ci. Cette technique, complexe, a été décrite dans WO-A-94 12034 ;
- de faire intervenir l'agent biocide, avant la régénération de la cellulose, sous forme de particules matricées (« sous forme protégée »). La matrice desdites particules, chargée en agent biocide, assure une double fonction :
   + elle permet audit agent biocide de résister aux conditions sévères de la régénération ; et
   + elle permet de maîtriser la vitesse de libération dudit agent biocide.

Cette technique a été décrite, par la Demanderesse, dans EP-A- 617 074 ;
- de faire intervenir, conjointement, un agent biocide particulier avec un liant, dans le procédé de fabrication d'éponges. Ledit biocide particulier est introduit dans la viscose, en solution dans un solvant organique ou en mélange avec un tensioactif, en amont de la régénération en milieu basique (avant l'agent porophore). Cette technique est décrite dans JP-A-47 50867. Pour sa mise en oeuvre, les inventeurs ont exclu, explicitement de nombreux biocides, dont le pentachlorophénol, et implicitement donc le triclosan (qui appartient à la même famille des dérivés chlorés du phénol et qui présente des caractéristiques physico-chimiques proches de celles dudit pentachlorophénol). Lesdits inventeurs n'ont retenu que le bistributyl oxyde d'étain et le tributyl fluorure d'étain.

Plus généralement, dans des contextes différents de celui de la fabrication des produits cellulosiques alvéolaires artificiels, on a décrit l'intervention de biocides. On a notamment décrit :
- dans DE-A-32 14610, des fibres synthétiques dites antimicrobiennes, obtenues par mise en fusion d'une masse, dissolution de l'agent antimicrobien dans ladite masse en fusion et filage. Le matériau fibreux synthétique obtenu n'a rien à voir avec les produits de l'invention. Son procédé de fabrication n'a rien à voir avec le procédé de l'invention (mise en fusion / solubilisation puis régénération) ;
- dans EP-A-0 709 507, l'intervention d'un biocide au cours de la fabrication d'un latex et l'utilisation dudit latex ainsi chargé dudit biocide pour le liage de nontissés ;
- dans DE-A-1 288 747, des associations synergiques de biocides. Lesdites associations sont décrites per se, en référence à l'efficacité biocide. Il n'est pas abordé le problème de la fixation d'un biocide ou d'une association de biocides à un substrat quelconque ;
- dans BE-A-644 153, un procédé de protection des matières organiques vis-à-vis des micro-organismes. Selon une variante dudit procédé, les produits biocides -des 1-phénoxy-2-hydroxybenzènes- sont introduits dans lesdites matières. Les modes d'introduction ne sont pas décrits en détail pour tous les types de matières cités. On ne trouve notamment aucune indication en référence aux matériaux alvéolaires cellulosiques artificiels. On ne trouve pas, non plus, de précisions, quant au mode de fixation, en général, des produits biocides introduits, quant à la stabilité de ladite fixation, quant à la durabilité de la protection conférée... Il est seulement illustré l'introduction de triclosan, dans de la viscose non fibrée, préalablement à la régénération acide de ladite viscose, pour obtenir des pellicules de cellulose régénérée présentant telles quelles une bonne résistance à l'attaque bactérienne.

En référence au problème technique de la protection, efficace et durable, des matériaux alvéolaires à base de cellulose régénérée, contre l'action des micro-organismes, la Demanderesse propose, dans le cadre de la présente invention, une solution originale qui repose sur la sélection d'un biocide particulier et sur son mode de fixation au sein de la matrice cellulosique. Ladite solution originale convient, à la fois, pour les éponges et les toiles-éponges, malgré les conditions d'obtention substantiellement différentes desdites éponges et toiles-éponges (voir plus loin).

Le biocide sélectionné est intéressant, de plusieurs points de vue :
- il s'agit per se d'un produit très performant : il est efficace, à des doses raisonnables ; il n'est pas toxique, il présente un large spectre...
- il peut intervenir, du fait de ses caractéristiques physico-chimiques, au sein des matériaux alvéolaires cellulosiques, non conditionné, et plus particulièrement non matricé ;
- il est susceptible, du fait de ses caractéristiques physico-chimiques, d'être piégé au sein desdits matériaux, pour y exercer durablement son action.

Selon son premier objet, la présente invention concerne donc des matériaux alvéolaires à base de cellulose régénérée qui renferment, de façon stable, une quantité efficace dudit biocide et plus précisément des matériaux alvéolaires à base de cellulose régénérée, du type éponge ou toile-éponge, qui présentent une résistance durable aux micro-organismes dans la mesure où, de façon caractéristique, dans leur masse cellulosique, ils renferment une quantité efficace de 2,4,4'-trichloro-2'-hydroxy-diphényléther, réparti, non matricé, ainsi qu'une quantité efficace d'au moins un liant choisi parmi les latex.

Les matériaux de l'invention du type éponge, toile-éponge, sont utilisés en tant que tels ou intégrés dans une structure plus complexe, notamment du type combiné. On a décrit, selon l'art antérieur, de telles structures du type combiné et notamment des combinés de nettoyage dans la demande EP-A-500 460 et des combinés asséchants dans la demande FR-A-2 680 670. De tels combinés sont, dans le cadre de la présente invention, réalisés avec des éponges et toiles-éponges, protégées durablement des micro-organismes, dans la mesure où elles renferment une quantité efficace de 2,4,4'-trichloro-2'-hydroxy-diphényléther et une quantité efficace d'au moins un liant.

Ledit 2,4,4'-trichloro-2'-hydroxy-diphényléther, qui répond aux formules chimiques ci-après
- formule brute : C₁₂H₇Cl₃O₂
- formule développée : 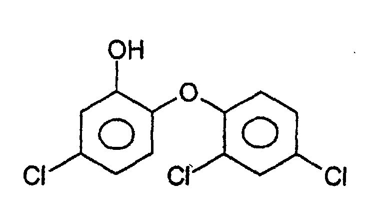
est connu sous la dénomination : triclosan. Il se présente, à température ambiante, sous la forme d'une poudre blanche.

Ce biocide est commercialisé par la société CIBA SPECIALITES CHIMIQUES, sous la marque IRGASAN DP 300®. Il est plus particulièrement utilisé à ce jour dans les domaines des produits d'entretien ménager et cosmétiques, ainsi que pour traiter des textiles, notamment des nontissés.

De façon caractéristique, la Demanderesse en préconise l'intervention, non matricé, au sein de la masse cellulosique de matériaux à base de cellulose régénérée. De façon non évidente, une telle intervention s'est révélée non seulement possible mais particulièrement opportune, notamment pour les raisons exposées ci-dessus.

Ledit triclosan se trouve généralement réparti, de façon uniforme (voir plus loin son mode d'intervention dans le procédé d'élaboration des matériaux alvéolaires cellulosiques), en une quantité comprise entre 0,001 et 10% en poids, par rapport au poids de cellulose sèche. En fait, une quantité de 0,05 à 5% en poids, par rapport au poids de cellulose sèche, suffit généralement et on préconise dans le cadre de la présente invention d'en faire intervenir avantageusement de 0,2 à 2% en poids, seulement (par rapport au poids de cellulose sèche).

La quantité d'intervention n'est pas vraiment critique. L'homme du métier est à même de l'optimiser.

Pour ce qui concerne la stabilité et l'efficacité dudit triclosan au sein des matériaux de l'invention, elle est bien supérieure à celle de nombreux biocides, dans la mesure où notamment ledit triclosan est un composé chimique très faiblement soluble en milieu aqueux, insensible aux tensio-actifs anioniques.

Ladite stabilité dudit triclosan au sein du matériau de l'invention est appréciée, tant en référence aux pertes de celui-ci au cours de la régénération, lorsqu'il est introduit en amont de ladite régénération, qu'en référence aux pertes de celui-ci lors des premières utilisations dudit matériau (qu'il ait été introduit en amont et/ou en aval de ladite régénération).

Pour optimiser ladite stabilité, lier, chimiquement et/ou physiquement, plus intensément, ledit triclosan au réseau de cellulose, on fait intervenir dans le procédé d'élaboration des matériaux de l'invention au moins un liant du type latex. En sus dudit latex, on peut éventuellement faire intervenir au moins un composé cationique. Les conditions d'intervention de ces liant(s) et composé(s) cationique(s) sont précisées, plus avant dans le présent texte, en référence au procédé d'élaboration des matériaux de l'invention.

Ainsi, selon l'invention, les matériaux alvéolaires à base de cellulose régénérée renferment-ils, outre ledit triclosan :
- une quantité efficace d'au moins un liant choisi parmi les latex, avantageusement les latex dont le polymère renferme des groupements acrylonitrile (ce dernier type de latex s'est révélé particulièrement efficace à des doses raisonnables qui n'affectent guère l'hydrophilie des matériaux de l'invention) ;
   voire, en plus :

- une quantité efficace d'au moins un composé cationique. L'intervention d'un tel composé cationique est tout particulièrement avantageuse au sein de la structure des matériaux cellulosiques alvéolaires en volume de l'invention : les éponges.

On précise ci-après, de façon nullement limitative, les quantités d'intervention et la nature de liants intervenants et de composés cationiques susceptibles d'intervenir.

Le liant, de type latex, peut notamment être choisi parmi les latex acryliques, les latex vinyliques, les latex butadiène-styrène, les latex butadiène-styrène-acrylonitrile, les latex butadiène-acrylonitrile et leurs mélanges. On a vu que l'on préconise vivement l'intervention de latex dont le polymère renferme des groupements acrylonitrile.

Le liant de type latex (ou mélanges de tels liants) intervient généralement jusqu'à 10% en poids, plus généralement entre 0,5 et 5% en poids, avantageusement entre 2 et 4% en poids. Lesdits pourcentages en poids s'entendent, pourcentages en poids de latex sec par rapport au poids de cellulose sèche. Faire intervenir une grande quantité de latex est évidemment préjudiciable au caractère hydrophile du produit final.

Au sein des matériaux de l'invention, la fonction du latex ne se limite en aucune façon à un piégeage mécanique du biocide dans la mesure où la Demanderesse a constaté que ledit biocide est parfaitement fixé lorsqu'il intervient, dans le procédé d'élaboration des matériaux (voir plus loin) en aval dudit latex, voire après la réticulation dudit latex par chauffage. Au sein des matériaux de l'invention, l'interaction biocide/latex semble donc basée sur des forces physico-chimiques, du type Van der Waals.

Le composé cationique (ou mélange de composés cationiques) peut généralement intervenir jusqu'à 5% en poids, plus généralement entre 0,05 et 2% en poids, par rapport au poids de cellulose sèche. De manière particulièrement avantageuse, il intervient en léger excès stoechiométrique par rapport au triclosan. En faire intervenir une plus grande quantité n'a guère d'effet, dans la mesure où la quantité ajoutée en excès est inexorablement éliminée au cours des premières utilisations du produit en milieu aqueux.

Dans le cadre de la présente invention, la Demanderesse a notamment mis en évidence (en menant des essais comparatifs : en comparant la quantité de triclosan résiduelle après différents cycles de vieillissement dans des produits de l'invention, renfermant de tels additifs et des produits de l'invention, exempt de tels additifs) l'action positive :
- de dispersions aqueuses d'un copolymère à base d'acrylate de butyle et d'acrylonitrile (et, en particulier, de la dispersion aqueuse commercialisée sous le nom d'ACRONAL 32 D® par la société BASF),
- de dispersions aqueuses d'un copolymère à base de butadiène et d'acrylonitrile (et, en particulier, de la dispersion aqueuse commercialisée sous le nom de PERBUNAN 2890® par la société BAYER) ;
- d'un composé présentant un motif biguanide (et en particulier du chlorhydrate de polyhexaméthylènebiguanide ou P.H.M.B., notamment commercialisé, sous forme de solution aqueuse, sous le nom VANTOCIL IB® par la société ZENECA BIOCIDES),
- de la déhydroabiéthylamine ou de son acétate (ou R.A.D),
- d'un ammonium quaternaire (et en particulier du chlorure de N-(C₁₂-C₁₄)alkyl-N, N-diméthyl-N-benzylammonium ou C.A.M.B., notamment commercialisé, sous forme de solution, sous le nom PREVENTOL R 50® par la société BAYER).

Les performances de matériaux de l'invention sont montrées dans la partie exemple qui suit la présente description.

On se propose maintenant de décrire le second objet de la présente invention à savoir un procédé pour la préparation des matériaux décrits ci-dessus ; procédé basé sur le procédé viscose de l'art antérieur dans lequel, de façon caractéristique, on fait intervenir, à un ou plusieurs niveaux, du triclosan, au moins un latex et éventuellement, au moins un composé cationique.

De manière générale, ledit procédé comprend :
+ la préparation d'une masse pâteuse à partir de viscose et notamment de matières fibreuses, d'une quantité efficace d'agent(s) porophore(s) et éventuellement d'une quantité efficace de pigment(s) ;
+ la mise en forme de cette masse pâteuse ;
+ le traitement thermique de celle-ci, en milieu acide ou basique, pour que s'exerce l'action du(des)dit(s) agent(s) porophore(s) et que soit régénérée la cellulose.

On précise ci-après, quelque peu, chacune desdites étapes.

La masse pâteuse est préparée à partir, notamment :
1) d'une solution basique de xanthate de cellulose ou viscose (ladite viscose étant obtenue par action d'une solution alcaline sur la pâte cellulosique de base; action qui transforme ladite pâte cellulosique en alcali-cellulose, laquelle réagit avec du sulfure de carbone, pour former un xanthogénate de cellulose, lequel est solubilisé dans de l'eau sodée),
2) de matières fibreuses, comme le coton, le sisal et le lin, destinées à augmenter la résistance mécanique du produit fini,
3) généralement aussi de pigments, destinés à imposer la couleur dudit produit fini,
4) d'agents porophores, comme le sel de Glauber (sulfate de sodium décahydraté), matières cristallines solubles et/ou fusibles destinées à former des pores après coagulation de ladite masse pâteuse par lessivage et/ou fusion.

Les matières fibreuses sont, en principe, ajoutées dans un premier temps à la viscose. Après seulement, interviennent les pigments et les agents porophores. Ladite masse pâteuse peut notamment être mise en forme par moulage (contexte des éponges), ou enduction de part et d'autre ou d'un seul côté d'au moins une grille, ou dépôt sur une bande porteuse (contexte des toiles-éponges).

Pour ce qui concerne le traitement thermique, il peut être mis en oeuvre selon trois principales variantes qualifiées respectivement de régénération électrique, de régénération acide, et de régénération vapeur.

Selon la première desdites variantes - régénération électrique - le chauffage est mis en oeuvre en faisant passer un courant électrique alternatif entre des électrodes maintenues au contact de la pâte. Cette variante est surtout développée dans le contexte de la fabrication des éponges. Le traitement thermique est ici mis en oeuvre, compte tenu de la composition chimique de la pâte, en milieu basique.

Selon les deux autres variantes - régénération acide et régénération vapeur
- la masse pâteuse est chauffée dans des bains dits de régénération. Ladite masse pâteuse est mise au contact ; soit
   - avec un milieu acide (pH inférieur à 1), à des températures comprises entre 50 et 70°C, pendant quelques minutes (régénération dite acide, qui fait avantageusement intervenir un mélange d'acide sulfurique et de sulfate de sodium, pour la fabrication de toiles-éponges), soit
   - avec un milieu basique (pH voisin de 10), à des températures voisines de 100°C, pendant quelques heures (régénération dite vapeur, qui fait avantageusement intervenir un mélange d'hydroxyde de sodium et de sulfate de sodium, pour la fabrication d'éponges).

Les produits ainsi obtenus - matériaux alvéolaires cellulosiques - sont ensuite, selon le procédé classique, rincés, éventuellement blanchis, séchés, généralement plastifiés avant d'être découpés et emballés.

De façon caractéristique, selon l'invention, dans le cadre de ce procédé de l'art antérieur, on prévoit l'intervention du triclosan, non matricé, et celle d'un liant. Ledit triclosan est ajouté :
- en amont et/ou en aval dudit traitement thermique, lorsque celui-ci est mis en oeuvre en milieu acide (contexte de la fabrication des toiles-éponges) ;
- en aval dudit traitement thermique, lorsque celui-ci est mis en oeuvre en milieu basique (contexte de la fabrication des éponges).

Il est particulièrement avantageux de pouvoir faire intervenir ledit triclosan, en amont de ladite régénération acide.

Ledit triclosan intervient généralement sous la forme d'une solution sodique, en une seule fois.

Il intervient en une quantité efficace, notamment telle que précisée ci-dessus.

Ledit procédé de l'invention comprend, en outre
- l'addition, (dans la masse pâteuse) en amont du traitement thermique et/ou (dans le produit semi-fini) en aval du traitement thermique, d'une quantité efficace d'au moins un liant choisi parmi les latex, avantageusement les latex dont le polymère renferme des groupements acrylonitrile ;
   et, éventuellement,
- l'addition, (dans le produit semi-fini) en aval du traitement thermique, d'une quantité efficace d'au moins un composé cationique.

Le(s)dit(s) latex peu(ven)t notamment être introduit(s) soit lors de l'élaboration de la masse pâteuse (avant régénération, en particulier lors de l'ajout dans celle-ci des pigments destinés à colorer le produit final), soit, après régénération de celle-ci.

Dans le cadre du procédé de l'invention, le(s) latex peu(ven)t tout à fait intervenir après le biocide.

En ce qui concerne le(s) composé(s) cationique(s), on rappelle ici que son (leur) intervention est tout particulièrement avantageuse dans le contexte de la fabrication des éponges. Il s'avère opportun de l'(les) introduire après régénération, avantageusement après ledit triclosan et ledit latex. Dans l'hypothèse où une opération de plastification est mise en oeuvre, le composé cationique intervient avantageusement conjointement au plastifiant si les deux produits sont compatibles ou avantageusement avant ledit plastifiant si les deux produits sont incompatibles.

On se propose de préciser maintenant des mises en oeuvre préférées du procédé de l'invention, pour la préparation d'éponges, d'une part et de toiles-éponges, d'autre part.
- Pour ce qui concerne les éponges, la régénération est mise en oeuvre en milieu basique et le produit semi-fini est généralement séché et/ou plastifié. On a vu que, dans un tel contexte, le triclosan est ajouté en aval du traitement thermique. (Ajouté en amont, il se solubiliserait dans le bain basique de régénération). Le latex intervenant peut être ajouté en amont et/ou en aval du traitement thermique (de régénération). Il est avantageusement ajouté en amont dudit traitement thermique et lorsqu'il intervient en aval de celui-ci, il est avantageusement ajouté avant ou en même temps que ledit triclosan. Dans le but d'optimiser la «fixation» dudit triclosan dans le réseau cellulosique, on fait avantageusement intervenir dans le cadre de cette mise en oeuvre préférée, au moins un composé cationique, en aval dudit traitement thermique.

On a vu, de manière générale, qu'un tel composé cationique est ajouté, avantageusement après ledit latex et ledit triclosan et lorsqu'une opération de plastification est mise en oeuvre, juste avant celle-ci, s'il est incompatible avec 1'(les)dit(s) agent(s) plastifiant(s) intervenant ou en même temps que le(les)dit(s) agent(s) plastifiant(s), s'ils sont compatibles.

On préfère donc tout particulièrement élaborer les éponges de l'invention, en ajoutant le latex en amont du traitement thermique et le triclosan en aval dudit traitement thermique.
- Pour ce qui concerne les toiles-éponges, la régénération est mise en oeuvre en milieu acide et de la même façon le produit semi-fini est généralement plastifié. On a vu que dans un tel contexte, le triclosan peut être ajouté aussi bien en amont qu'en aval du traitement thermique de régénération et que l'intervention de composé(s) cationique(s) se révèle moins opportune. On associe audit triclosan au moins un latex, ledit latex pouvant intervenir lui-aussi, aussi bien en amont qu'en aval du traitement thermique de régénération.

Dans le cadre de cette mise en oeuvre préférée, lesdits composés interviennent tous deux avantageusement en amont du traitement thermique et de façon encore plus avantageuse, le triclosan intervient le premier : il est ajouté à la viscose en même temps que les matières fibreuses et le latex intervient ultérieurement dans la masse pâteuse constituée.

La plastification mise en oeuvre sur les toiles-éponges de l'invention l'est avantageusement à un stade quasi-final. Elle intervient après les additions des composés du type triclosan, latex.

La présente invention est illustrée par les exemples ci-après. Dans lesdits exemples, les pourcentages indiqués le sont, sauf indication contraire, en poids, par rapport au poids de cellulose sèche.

### A) Contexte des éponges

Les exemples qui suivent sont relatifs à des produits de type éponge dans lesquels l'IRGASAN DP 300® a été introduit après l'étape de régénération.

De manière générale :
- Les quantités d'IRGASAN DP 300® présentes dans les éponges ont été déterminées comme précisé ci-après.

Les produits plastifiés sont successivement comprimés 20 fois dans 300 ml d'eau distillée, puis dans 2 fois 300 ml de solution 0,1 N d'hydroxyde de sodium. Les trois solutions sont rassemblées et la quantité de triclosan extraite est déterminée par spectrophotométrie U.V..

Les produits non plastifiés sont comprimés 20 fois dans 300 ml de solution 0,1 N d'hydroxyde de sodium. La quantité de triclosan extraite est déterminée par spectrophotométrie U.V..
- La résistance à l'attaque bactérienne des produits traités est évaluée en introduisant 2,5 grammes d'éponge traitée dans 200 ml de bouillon T.C.S. préalablement inoculé à l'aide d'une suspension *d'Escherichia coli* de telle façon que le bouillon contienne environ 5.10³ U.F.C./ml. Après 4 et 24 heures d'incubation à 37°C, on détermine la population bactérienne. La note "++" est attribuée si la population est inférieure à 5.10⁴ U.F.C./ml, la note "+" est attribuée si la population est comprise entre 5.10⁴ U.F.C./ml et 5.10⁶ U.F.C/ml et la note "0" est attribuée si la population est supérieure à 5.10⁶ U.F.C./ml.
- Afin de simuler une utilisation ménagère, les éponges sont soumises à des cycles de vieillissement, à l'issue desquels la quantité d'IRGASAN DP 300® et la résistance à l'attaque bactérienne sont mesurées. Le cycle E60 consiste à faire subir à 3 éponges (pesant environ 20 grammes) un cycle machine à laver avec essorage (450 tours/minutes) à 60°C sans introduire de lessive. Le cycle F60 consiste à faire subir à 3 éponges (pesant environ 20 grammes) un cycle machine à laver avec essorage (450 tours/minutes) à 60°C en introduisant 92 grammes d'une lessive industrielle (lessive MATIC SPOT®).

### Exemple A-1

Des éponges de l'invention sont fabriquées selon le processus classique (procédé viscose avec coagulation électrique) en introduisant dans la viscose fibrée (xanthate de cellulose + fibres) respectivement 0, 2, 6 et 10% d'ACRONAL 32 D® (dispersion aqueuse, commercialisée par la société BASF, d'un copolymère à base d'acrylate de butyle et d'acrylonitrile). Après régénération basique, on introduit successivement 1,3 % d'IRGASAN DP 300® (en solution dans de l'hydroxyde de sodium) et 30 % de chlorure de magnésium (plastifiant), sous forme de solution (lesdits 30% étant exprimés en MgCl₂, anhydre). Les quantités de triclosan présentes (résiduelles) dans les produits après les différents cycles de vieillissement sont indiquées dans le tableau ci-après.

| Quantité d'ACRONAL 32D® introduite (%) | Quantité de triclosan après un cycle E60 (%) | Quantité de triclosan après un cycle F60 (%) |
|---|---|---|
| 0 | 0,06 | 0,02 |
| 2 ∗ | 0,12 | 0,03 |
| 6 ∗ | 0,27 | 0,05 |
| 10 ∗ | 0,47 | 0,07 |

| | | |
|---|---|---|
| ∗ Les pourcentages relatifs au latex s'entendent en latex commercial. | | |

On note que, plus la quantité de latex introduite est importante, plus le triclosan est retenu dans l'éponge.

### Exemple A-2

Les essais décrits dans l'exemple 1 sont renouvelés en introduisant dans la viscose fibrée (xanthate de cellulose + fibres) respectivement 6 % d'ACRONAL 32 D® et 7,3 % de PERBUNAN 2890® (dispersion aqueuse, commercialisée par la société Bayer, d'un copolymère à base de butadiène et d'acrylonitrile) (soit, compte tenu des extraits secs des deux dispersions, 3 % de copolymère). Les éponges sont traitées de la même façon que ci-dessus pour l'introduction de l'IRGASAN DP 300®.

Les quantités de triclosan présentes (résiduelles) dans les produits après les différents cycles de vieillissement sont indiquées dans le tableau ci-après :

| Nature du latex | Quantité de triclosan après un cycle E60 (%) | Quantité de triclosan après un cycle F60 (%) |
|---|---|---|
| ACRONAL 32D® | 0,27 | 0,05 |
| PERBUNAN 2890® | 0,37 | 0,07 |

Le PERBUNAN 2890® favorise plus la fixation du triclosan que l'ACRONAL 32D®.

### Exemple A-3

Des éponges sont fabriquées selon le processus classique (procédé viscose avec coagulation électrique) en introduisant dans la viscose fibrée (xanthate de cellulose + fibres), 6 % d'ACRONAL 32 D®. Après régénération basique, on introduit, dans un premier temps, de l'IRGASAN DP 300® (sous forme de solution dans de l'hydroxyde de sodium) dans les proportions précisées dans le tableau ci-dessous et, dans un second temps, un composé cationique, également dans les proportions précisées dans ledit tableau.

On a utilisé, à titre de composé cationique, le P.H.M.B (VANTOCIL IB® commercialisé par la société ZENECA BIOCIDES: chlorhydrate de poly(hexaméthylènebiguanide)) et le R.A.D. (acétate de dehydroabiéthylamine).

Les résultats des tests d'évaluation de la résistance des produits à l'attaque bactérienne après différents cycles de vieillissement sont rassemblés dans le tableau ci-dessous.

| Quantité de triclosan introduite (%) | Nature du composé cationique | Quantité de composé cationique introduite (%) | Résistance à l'attaque bactérienne après un cycle F60 |
|---|---|---|---|
| 0,7 | - | - | 0 |
| 0,7 | P.H.M.B. | 0,53 | + |
| 0,7 | P.H.M.B. | 1,06 | + |
| 0,7 | P.H.M.B | 1,59 | +/++ |
| 1 | - | - | 0 |
| 1 | R.A.D. | 3,58 | + |
| 1,3 | - | - | + |

Il s'avère que l'adjonction de composés cationiques permet d'augmenter de façon significative l'efficacité du traitement.

### Exemple A-4

Les essais décrits dans l'exemple 3 sont renouvelés en introduisant en même temps que le composé cationique une solution de chlorure de magnésium (plastifiant) de telle façon que l'éponge en contienne 30 % (lesdits 30% étant exprimés en MgCl₂ anhydre et par rapport au poids de cellulose sèche).

Le composé cationique intervenant est le C.A.M.B. (PREVENTOL R50® commercialisé par la société BAYER : chlorure de N-alkyl-N,N-diméthyl-N-benzylammonium)

Les résultats des tests d'évaluation de la résistance des produits à l'attaque bactérienne après différents cycles de vieillissement sont rassemblés dans le tableau ci-dessous.

| Quantité de triclosan introduite (%) | Nature du composé cationique | Quantité de composé cationique introduite (%) | Résistance à l'attaque bactérienne après un cycle E60 | Résistance à l'attaque bactérienne après un cycle F60 |
|---|---|---|---|---|
| 0,7 | - | - | + | 0 |
| 0,7 | C.A.M.B. | 1,02 | +/++ | +/++ |
| 0,5 | C.A.M.B. | 0,73 | +/++ | + |

On observe, même en présence de chlorure de magnésium, une amélioration de la protection de l'éponge cellulosique.

### B) Contexte des toiles-éponges

Les exemples qui suivent sont relatifs à des produits de type toile-éponge dans lesquels l'IRGASAN DP 300® a été introduit avant l'étape de régénération (acide).

De manière générale :
- Les quantités d'IRGASAN DP 300® présentes dans les toiles-éponges ont été déterminées de la façon suivante.

Les produits sont laissés dans des solutions 0,1 N d'hydroxyde de sodium pendant 24 heures. La quantité de triclosan extraite est déterminée par spectrophotométrie U.V.
- La résistance à l'attaque bactérienne des produits traités est évaluée en introduisant dans un disque de 2 grammes de toile-éponge, 4 ml de bouillon T.C.S. préalablement inoculé à l'aide d'une suspension *d'Escherichia coli* de telle façon que le bouillon contienne environ 10⁵ U.F.C./ml. L'échantillon imprégné est alors déposé sur une gélose. Après 48 heures d'incubation à 37°C, on détermine visuellement la population bactérienne. La note "+" est attribuée si la croissance est totalement inhibée, la note "+/-" est attribuée si quelques souches sont observables au contact entre la gélose et l'échantillon et la note "-" est attribuée si l'échantillon est totalement colonisé.
- Afin de simuler une utilisation ménagère, les toiles-éponges sont soumises à des cycles de vieillissement, à l'issue desquels la quantité d'IRGASAN DP 300® et la résistance à l'attaque bactérienne sont mesurées. Le cycle D consiste à exprimer 200 fois le produit dans une solution contenant du PAIC® vaisselle (à raison de 0,5 g de produit par litre de solution). Le cycle E60 consiste à faire subir à 1 toile-éponge (pesant environ 11 grammes) un cycle machine à laver avec essorage (450 tours/minutes) à 60°C sans introduire de lessive. Le cycle F60 consiste à faire subir à 1 toile-éponge (pesant environ 11 grammes) un cycle machine à laver avec essorage (450 tours/minutes) à 60°C en introduisant 92 grammes d'une lessive industrielle (lessive MATIC SPOT®). Le cycle F20 est identique au cycle F60, mais la température est réduite à 20°C.

Les résultats figurant dans les deux tableaux ci-après (exemples B-1 à B-6) ont été obtenus, à l'issue d'essais au cours desquels :
- l'IRGASAN DP 300® est introduit dans le xanthate de cellulose, en même temps que les fibres de renforcement qui interviennent, dispersées dans une solution d'hydroxyde de sodium ;
- le latex utilisé est l'ACRONAL 32D®. Il est introduit, après le biocide, dans la viscose fibrée (mélange du xanthate de cellulose et des fibres). Les cristaux porophores n'interviennent eux, qu'après ledit latex. On note, à la considération des exemples B-1 et B-2 d'une part, B-3 et B-4 d'autre part, combien l'intervention dudit latex est avantageuse.

Les deux ingrédients - biocide, latex - sont introduits avant l'étape de régénération.

Les pourcentages initiaux (quantités intervenantes) de biocide et de latex sont exprimés par rapport à la masse de cellulose sèche du produit. Les taux de biocide résiduel sont exprimés par rapport à la quantité de biocide initialement introduite.

| Exemples | Quantité de triclosan introduite (%) | Quantité de latex introduite (%) | Quantité de triclosan (%) | | | | |
|---|---|---|---|---|---|---|---|
| | | | après régénération | après un cycle D | après un cycle E60 | après un cycle F20 | après un cycle F60 |
| B-1 | 0,5 | 0 | 70 | 27 | 5 | 3 | 2 |
| B-2 | 0,5 | 3 | 88 | 40 | 6 | | 1 |
| B-3 | 1 | 0 | 60 | 30 | 10 | | 1 |
| B-4 | 1 | 2 | 95 | 65 | 15 | 6 | 0 |
| B-5 | 2 | 5 | 98 | 68 | 40 | 37 | 1 |
| B-6 | 2 | 3 | 95 | 67 | 35 | 25 | 2 |

| Exemples | Quantité de triclosan introduite (%) | Quantité de latex introduite (%) | Efficacité biocide | | | | |
|---|---|---|---|---|---|---|---|
| | | | après régénération | après un cycle D | après un cycle E60 | après un cycle F20 | après un cycle F60 |
| B-1 | 0,5 | 0 | + | + | - | - | - |
| B-2 | 0,5 | 3 | + | + | - | - | - |
| B-3 | 1 | 0 | + | + | + | | - |
| B-4 | 1 | 2 | + | + | + | +/- | - |
| B-5 | 2 | 5 | + | + | + | + | - |
| B-6 | 2 | 3 | + | + | + | + | +/- |

## Revendications

1. Matériau alvéolaire à base de cellulose régénérée, du type éponge ou toile-éponge, présentant une résistance durable aux micro-organismes, **caractérisé en ce qu'**il renferme, dans sa masse de cellulose régénérée, une quantité efficace de 2,4,4'-trichloro-2'-hydroxy-diphényléther (triclosan), réparti, non matricé, ainsi qu'une quantité efficace d'au moins un liant choisi parmi les latex.

2. Matériau selon la revendication 1, **caractérisé en ce qu'**il renferme de 0,001 à 10% en poids, plus généralement de 0,05 à 5% en poids et avantageusement de 0,2 à 2% en poids, par rapport au poids de cellulose sèche, dudit triclosan.

3. Matériau selon l'une des revendications 1 ou 2, **caractérisé en ce que** ledit liant est choisi parmi les latex dont le polymère renferme des groupements acrylonitrile.

4. Matériau selon l'une quelconque des revendications 1 à 3, **caractérisé en ce que** ledit liant intervient jusqu'à 10% en poids sec par rapport au poids de cellulose sèche, plus généralement entre 0,5 et 5% en poids sec, avantageusement entre 2 et 4% en poids sec.

5. Matériau selon l'une quelconque des revendications 1 à 4, **caractérisé en ce qu'**il renferme en outre une quantité efficace d'au moins un composé cationique.

6. Matériau selon la revendication 5, **caractérisé en ce que** ledit composé cationique intervient jusqu'à 5% en poids, par rapport au poids de cellulose sèche, plus généralement entre 0,05 et 2% en poids.

7. Matériau selon la revendication 5, **caractérisé en ce que** ledit composé cationique intervient en léger excès stoechiométrique par rapport au triclosan.

8. Procédé de préparation d'un matériau selon l'une quelconque des revendications précédentes, comprenant :
+ la préparation d'une masse pâteuse à partir de viscose et notamment de matières fibreuses, d'une quantité d'agent(s) porophore(s) et éventuellement d'une quantité efficace de pigment(s) ;
+ la mise en forme de cette masse pâteuse ;
+ le traitement thermique de celle-ci, en milieu acide ou basique, pour que s'exerce l'action du(des)dit(s) agent(s) porophore(s) et que soit régénérée la cellulose ;
**caractérisé en ce qu'**il comprend, en outre, d'une part, l'addition, d'une quantité efficace de 2,4,4'-trichloro-2'-hydroxy-diphényléther (triclosan), non matricé ; ledit triclosan étant ajouté :
- en amont et/ou en aval dudit traitement thermique, lorsque celui-ci est mis en oeuvre en milieu acide ;
- en aval dudit traitement thermique, lorsque celui-ci est mis en oeuvre en milieu basique ;
et d'autre part, l'addition, en amont et/ou en aval dudit traitement thermique, d'une quantité efficace d'au moins un liant choisi parmi les latex.

9. Procédé de préparation selon la revendication 8, **caractérisé en ce que** ledit liant est choisi parmi les latex dont le polymère renferme des groupements acrylonitrile.

10. Procédé de préparation selon l'une des revendications 8 ou 9, **caractérisé en ce qu'**il comprend, en outre, l'addition, en aval dudit traitement thermique, d'une quantité efficace d'au moins un composé cationique.

11. Procédé, selon l'une quelconque des revendications 8 à 10, pour la préparation d'une éponge présentant une résistance durable aux micro-organismes, comprenant :
+ la préparation d'une masse pâteuse à partir de viscose et notamment de matières fibreuses, d'une quantité efficace d'agent(s) porophore(s) et éventuellement d'une quantité efficace de pigment(s) ;
+ la mise en forme de cette masse pâteuse, notamment par moulage ;
+ le traitement thermique de celle-ci, en milieu basique, pour que s'exerce l'action du(des)dit(s) agent(s) porophore(s) et que soit régénérée la cellulose ;
+ le traitement du produit semi-fini obtenu incluant éventuellement son séchage et/ou sa plastification ;
**caractérisé en ce qu'**il comprend, en outre :
- en aval dudit traitement thermique en milieu basique, l'addition du triclosan ; ladite addition étant mise en oeuvre avant ou en même temps que l'opération de plastification, lorsque celle-ci intervient;
- en amont et/ou en aval dudit traitement thermique en milieu basique, l'addition d'au moins un latex; ledit latex étant ajouté de préférence en amont dudit traitement thermique et lorsqu'il intervient en aval de celui-ci, intervenant avantageusement avant ou en même temps que ledit triclosan ;
et avantageusement :
- en aval dudit traitement thermique, l'addition d'au moins un composé cationique ; ledit composé cationique étant ajouté, avantageusement après ledit latex et ledit triclosan; juste avant l'opération de plastification s'il est incompatible avec l'(les) agent(s) plastifiant(s) ou en même temps que le(les)dit(s) agent(s) plastifiant(s) s'il est compatible, lorsqu'une telle opération de plastification est mise en oeuvre.

12. Procédé, selon l'une quelconque des revendications 8 à 10, pour la préparation d'une toile-éponge présentant une résistance durable aux micro-organismes, comprenant :
+ la préparation d'une masse pâteuse à partir de viscose et notamment de matières fibreuses, d'une quantité efficace d'agent(s) porophore(s) et éventuellement d'une quantité efficace de pigment(s) ;
+ la mise en forme de cette masse pâteuse, notamment par enduction de part et d'autre ou d'un seul côté d'une grille ou par dépôt sur une bande porteuse;
+ le traitement thermique de celle-ci, en milieu acide, pour que s'exerce l'action du(des)dit(s) agent(s) porophore(s) et que soit régénérée la cellulose ;
**caractérisé en ce qu'**il comprend, en outre :
- en amont et/ou en aval dudit traitement thermique en milieu acide, l'addition du triclosan ;
- en amont et/ou en aval dudit traitement thermique en milieu acide, l'addition d'au moins un latex ;
ledit triclosan et ledit latex étant avantageusement ajoutés tous deux, en amont dudit traitement thermique; ledit triclosan étant, de façon encore plus avantageuse, dans ce contexte, ajouté dans la viscose en même temps que les matières fibreuses et ledit latex étant ajouté ultérieurement dans la masse pâteuse constituée.

## Patentansprüche

1. Zellenförmiges Material auf Basis von regenerierter Cellulose vom Schwamm- oder Schwammtuch-Typ, das eine dauerhafte Beständigkeit (Resistenz) gegen Mikroorganismen aufweist, **dadurch gekennzeichnet, dass** es in seiner Masse aus regenerierter Cellulose eine wirksame Menge von verteiltem und nicht eingeschlossenem 2,4,4'-Trichloro-2'-hydroxy-diphenylether (Triclosan), sowie eine wirksame Menge mindestens eines Bindemittels aus der Gruppe der Latices enthält.

2. Material nach Anspruch 1, **dadurch gekennzeichnet, dass** es 0,001 bis 10 Gew.-%, allgemeiner 0,05 bis 5 Gew.-% und zweckmäßig 0,2 bis 2 Gew.-%, bezogen auf das Gewicht der trockenen Cellulose, Triclosan enthält.

3. Material nach einem der Ansprüche 1 oder 2, **dadurch gekennzeichnet, dass** das Bindemittel ausgewählt ist unter den Latices, deren Polymer Acrylnitril-Gruppen enthält.

4. Material nach einem der Ansprüche 1 bis 3, **dadurch gekennzeichnet, dass** das Bindemittel bis zu 10 Trockengewichtsprozent, bezogen auf das Gewicht der trockenen Cellulose, allgemeiner 0,5 bis 5 Trockengew.-%, zweckmäßig 2 bis 4 Trockengew.-%, ausmacht.

5. Material nach einem der Ansprüche 1 bis 4, **dadurch gekennzeichnet, dass** es außerdem eine wirksame Menge mindestens einer kationischen Verbindung enthält.

6. Material nach Anspruch 5, **dadurch gekennzeichnet, dass** die kationische Verbindung bis zu 5 Gew.-%, bezogen auf das Gewicht der trockenen Cellulose, allgemeiner 0,05 bis 2 Gew.-%, ausmacht.

7. Material nach Anspruch 5, **dadurch gekennzeichnet, dass** die kationische Verbindung in leichtem stöchiometrischem Überschuss gegenüber Triclosan vorliegt.

8. Verfahren zur Herstellung eines Materials nach einem der vorhergehenden Ansprüche, das umfasst:
- das Herstellen einer pastösen Masse aus Viscose und insbesondere Fasermaterialien, einer wirksamen Menge eines oder mehrerer Treibmittel (Porenbildnern) und gegebenenfalls einer wirksamen Menge eines oder mehrerer Pigmente;
- das Formen dieser pastösen Masse;
- das thermische Behandeln derselben in einem sauren oder basischen Medium, sodass sich die Wirkung des (der) Treibmitiel(s) entfaltet und die Cellulose regeneriert wird;
**dadurch gekennzeichnet, dass** es außerdem umfasst
einerseits die Zugabe einer wirksamen Menge von nicht-eingeschlossenem 2,4,4'-Trichloro-2'-hydroxy-diphenylether (Triclosan), der (das) zugegeben wird:
- stromaufwärts (vor) und/oder stromabwärts (nach) der thermischen Behandlung, wenn diese in einem sauren Medium durchgeführt wird;
- stromabwärts (nach) der thermischen Behandlung, wenn diese in einem basischen Medium durchgeführt wird; und
andererseits die Zugabe einer wirksamen Menge mindestens eines Bindemittels, ausgewählt unter den Latices, stromaufwärts (vor) und/oder stromabwärts (nach) der thermischen Behandlung.

9. Herstellungsverfahren nach Anspruch 8, **dadurch gekennzeichnet, dass** das Bindemittel ausgewählt wird unter den Latices, deren Polymer Acrylnitril-Gruppen enthält.

10. Herstellungsverfahren nach einem der Ansprüche 8 oder 9, **dadurch gekennzeichnet, dass** es außerdem umfasst die Zugabe einer wirksame Menge mindestens einer kationischen Verbindung stromabwärts (nach) der thermischen Behandlung.

11. Verfahren nach einem der Ansprüche 8 bis 10 zur Herstellung eines Schwammes, der eine dauerhafte Beständigkeit (Resistenz) gegenüber Mikroorganismen aufweist, das umfasst:
- das Herstellen einer pastösen Masse aus Viscose und insbesondere Fasermaterialien, einer wirksamen Menge eines oder mehrerer Treibmittel (Porenbildnern) und gegebenenfalls einer wirksamen Menge eines oder mehrerer Pigmente;
- das Verformen dieser pastösen Masse, insbesondere durch Formen (Gießen);
- das thermische Behandeln derselben in einem basischen Medium, damit sich die Wirkung des (der) Treibmittel(s) entfalten kann und die Cellulose regeneriert wird;
- das Behandeln des dabei erhaltenen halbfertigen Produkts einschließlich seiner gegebenenfalls durchgeführten Trocknung und/oder Plastifizierung;
**dadurch gekennzeichnet, dass** das Verfahren außerdem umfasst:
- die Zugabe von Triclosan stromabwärts (nach) der thermischen Behandlung in einem basischen Medium,
wobei die genannte Zugabe vor der oder gleichzeitig mit der Plastifizierung, falls diese durchgeführt wird, erfolgt;
- die Zugabe mindestens eines Latex stromaufwärts (vor) und/oder stromabwärts (nach) der thermischen Behandlung in einem basischen Medium, wobei der Latex vorzugsweise zugegeben wird stromaufwärts (vor) der thermischen Behandlung und, wenn er stromabwärts (nach) derselben zugeführt wird, die Zugabe zweckmäßig vor dem oder gleichzeitig mit dem Triclosan erfolgt; und zweckmäßig
- die Zugabe mindestens einer kationischen Verbindung stromabwärts (nach) der thermischen Behandlung, wobei die kationische Verbindung zweckmäßig nach dem Latex und dem Triclosan zugegeben wird unmittelbar vor Durchführung der Plastifizierung, wenn diese mit dem (den) Weichmacher(n) inkompatibel ist, oder gleichzeitig mit dem (den) Weichmacher(n), wenn sie damit kompatibel ist, wenn eine solche Plastifizierung durchgeführt wird.

12. Verfahren nach einem der Ansprüche 8 bis 10 zur Herstellung eines Schwammtuches, das eine dauerhafte Beständigkeit (Resistenz) gegenüber Mikroorganismen aufweist, wobei das Verfahren umfasst:
- das Herstellen einer pastösen Masse aus Viscose und insbesondere Fasermaterialien, einer wirksamen Menge eines oder mehrerer Treibmittel und gegebenenfalls einer wirksamen Menge eines oder mehrerer Pigmente;
- das Formen dieser pastösen Masse, insbesondere durch beidseitiges oder einseitiges Bedecken mit einem Gitter (Rost) oder durch Abscheidung auf einem Trägerband;
das thermische Behandeln desselben in einem sauren Medium, sodass sich die Wirkung des (der) Treibmittel(s) entfalten kann und die Cellulose regeneriert wird;
**dadurch gekennzeichnet, dass** das Verfahren außerdem umfasst:
- die Zugabe von Triclosan stromaufwärts (vor) und/oder stromabwärts (nach) der thermischen Behandlung in einem sauren Medium;
- die Zugabe mindestens eines Latex stromaufwärts (vor) und/oder stromabwärts (nach) der thermischen Behandlung in einem sauren Medium;
wobei das Triclosan und der Latex zweckmäßig beide stromaufwärts (vor) der thermischen Behandlung zugegeben werden, das Triclosan noch zweckmäßiger in diesem Zusammenhang der Viscose gleichzeitig mit den Fasermaterialien zugegeben wird und der Latex schließlich der gebildeten pastösen Masse zugegeben wird.

## Claims

1. Regenerated cellulose-based cellular material of the sponge or sponge-cloth type with a long-term resistance to microorganisms, **characterized in that** it contains in its regenerated cellulosic bulk, an effective amount of 2,4,4'-trichloro-2'-hydroxydiphenyl ether (triclosan) which is distributed and not enclosed in a matrix, as well as an effective amount of at least one binder selected from the latexes.

2. The material according to claim 1, **characterized in that** it contains from 0.001 to 10% by weight, more generally from 0.05 to 5% by weight and advantageously from 0.2 to 2% by weight of said triclosan, based on the weight of dry cellulose.

3. The material according to one of claims 1 or 2, **characterized in that** said binder is selected from the latexes whose polymer contains acrylonitrile groups.

4. The material according to any one of claims 1 to 3, **characterized in that** said binder is used in an amount of up to 10% by dry weight, more generally of between 0.5 and 5% by dry weight and advantageously of between 2 and 4% by dry weight, based on the weight of dry cellulose.

5. The material according to any one of claims 1 to 4, **characterized in that** it also contains an effective amount of at least one cationic compound.

6. The material according to claim 5, **characterized in that** said cationic compound is used in an amount of up to 5% by weight and more generally of between 0.05 and 2% by weight, based on the weight of dry cellulose.

7. The material according to claim 5, **characterized in that** said cationic compound is used in slight stoichiometric excess relative to the triclosan.

8. A process for the preparation of a material according to any one of the preceding claims, comprising:
+ the preparation of a pulp from viscose and especially fibrous materials, an effective amount of porophoric agent(s) and optionally an effective amount of pigment(s);
+ the shaping of this pulp; and
+ the heat treatment thereof, in an acid or basic medium, so that the action of said porophoric agent(s) is exerted and the cellulose is regenerated,
**characterized in that** it further comprises, on the one hand, the addition of an effective amount of 2,4,4'-trichloro-2'-hydroxydiphenyl ether (triclosan) not enclosed in a matrix, said triclosan being added:
- upstream and/or downstream of said heat treatment, when the latter is carried out in an acid medium; or
- downstream of said heat treatment, when the latter is carried out in a basic medium;
and on the other hand, the addition, upstream and/or downstream from said heat treatment, of an effective amount of at least one binder selected from the latexes.

9. The preparative process according to claim 8, **characterized in that** said binder is selected from latexes whose polymer contains acrylonitrile groups.

10. The preparative process according to one of claims 8 or 9, **characterized in that** it further comprises the addition, downstream of said heat treatment, of an effective amount of at least one cationic compound.

11. The process according to any one of claims 8 to 10 for the preparation of a sponge with a long-term resistance to microorganisms, comprising:
+ the preparation of a pulp from viscose and especially fibrous materials, an effective amount of porophoric agent(s) and optionally an effective amount of pigment(s);
+ the shaping of this pulp, especially by molding;
+ the heat treatment thereof, in a basic medium, so that the action of said porophoric agent(s) is exerted and the cellulose is regenerated; and
+ the treatment of the semi-finished product obtained, optionally including the drying and/or the plasticizing thereof,
**characterized in that** it also comprises:
- downstream of said heat treatment in a basic medium, the addition of the triclosan, said addition being effected before or at the same time as the plasticizing operation, if the latter is carried out;
- upstream and/or downstream of said heat treatment in a basic medium, the addition of at least one latex, said latex preferably being added upstream of said heat treatment and, if it is introduced downstream of said heat treatment, advantageously being added before or at the same time as said triclosan; and advantageously:
- downstream of said heat treatment, the addition of at least one cationic compound, said cationic compound advantageously being added after said latex and said triclosan, just before the plasticizing operation if it is incompatible with the plasticizer(s), or at the same time as said plasticizer(s) if it is compatible, if such a plasticizing operation is carried out.

12. The process according to any one of claims 8 to 10 for the preparation of a sponge-cloth with a long-term resistance to microorganisms, comprising:
+ the preparation of a pulp from viscose and especially fibrous materials, an effective amount of porophoric agent(s) and optionally an effective amount of pigment(s);
+ the shaping of this pulp, especially by coating on either side or on only one side of a grid or by deposition on a carrier strip; and
+ the heat treatment thereof, in an acid medium, so that the action of said porophoric agent(s) is exerted and the cellulose is regenerated,
**characterized in that** it further comprises:
- upstream and/or downstream of said heat treatment in an acid medium, the addition of the triclosan; and
- upstream and/or downstream of said heat treatment in an acid medium, the addition of at least one latex,
said triclosan and said latex advantageously both being added upstream of said heat treatment, said triclosan, even more advantageously in this context, being added to the viscose at the same time as the fibrous materials, and said latex being added afterwards to the pulp formed.
